# EUROPEAN PATENT APPLICATION

(11) **EP 1 801 285 A1**
(43) Date of publication of application: **27.06.2007**
(21) Application number: 06020811.3
(22) Date of filing: 04.10.2006
(51) Int. Cl.: D21F 3/02

(54) **Press roll**

(30) Priority: 07.10.2005 FI 20051007
(71) Applicant: Vaahto OY, 15860 Hollola (FI)
(72) Inventor: Aho, Erkki, 47200 Elimäki (FI)
(74) Representative: Laine, Terho Tapio

(57) **Abstract**

An apparatus in connection with a press roll which press roll comprises a rotating belt shell (1), a fixed advantageously non-rotatable support beam (2) axially extending through the belt shell and advantageously having a stub shaft at its each end, two belt-shell ends (3, 4) axially displaceable on the support beam, advantageously on each stub shaft, and fastening elements for fastening the edges on the side of each belt-shell end of the belt shell to each belt-shell end. The apparatus comprises a first support element (13), which is arranged movably to the support beam (2), most advantageously on its stub shaft, and supported by which support element (13) the belt-shell end (3, 4) is arranged bearing-mountedly, whereby the support element (13) and the support beam (2), most advantageously a stub shaft, are arranged to operate together as the moving devices of the axial displacement of at least one belt-shell end.

## Description

### Background of the invention

The invention relates to an apparatus in connection with a press roll according to the preamble of claim 1.

The invention also relates to a press roll according to claim 22.

A typical shoe press comprises a press roll i.e. shoe roll and a counter element, such as a backing roll. The press roll comprises a rotating flexible belt shell impermeable to liquid, a fixed and advantageously non-rotatable support beam extending axially through the belt shell and having a stub shaft at each end of it. The belt shell is typically arranged rotatably bearing-mountedly around the support beam. In the press roll, there typically is at least one press shoe, supported by the support beam, and elements for pressing the press shoe against the belt shell. Then, the belt shell can constitute a press zone together with the counter element. In the press roll, there are two belt-shell ends which can be axially displaced on each stub shaft. The belt shell is fastened from its edges to each belt-shell end. The belt-shell ends are bearing-mounted in relation to the support beam.

The applicant has previously presented a structure inside the shoe roll of the system in question. Known arrangements are described, inter alia, in FI patents 110529 and 110530.

Also known are structures in which at least one belt-shell end of the shoe roll and thus its rotating bearing are moved in the cross-direction of the machine by means of spring force, thrust directing outwards of a mechanical screw or several cylinders (3-4 pieces) inside the roll. As a result of the deflection of the support beam of the shoe roll, the rotating bearing is positioned at a certain angle in relation to the horizontal plane and follows the deflection of the beam. In an operating situation, an end torque is formed to the structure directing towards the centre line of the machine, and the rotation axis is almost parallel with the machine direction MD. The processing of the surface fabric of the shoe roll occurring in a press zone i.e. in a press point i.e. a nip forming between the shoe roll and the counter element further increases torque effect at the point of the rotating bearing.

To a structure sliding on the shaft of the support beam in the cross-direction of the machine i.e. CD direction is then exerted a force couple causing friction force between the sliding piece and the shaft. The structure can in the worst case be locked in position unless the dimensions are correct.

The object of this invention is to achieve a totally novel solution by means of which the disadvantages of known prior art will be avoided. Another object of the invention is to achieve a compact adjusting apparatus.

### Brief description of the invention

The invention is based on an idea in which the displacement mechanism of the belt-shell ends is integrated into connection with the belt-shell ends, advantageously as a part of their bearing.

More precisely, the apparatus according to the invention is mainly characterised in that the apparatus comprises a first support element which is arranged movably on the support beam, most advantageously on its stub shaft, and resting on which support element the belt shell is arranged bearing-mountedly, whereby the support element and the support beam, most advantageously a stub shaft, are arranged to function together as the moving device of the axial displacement of at least one belt-shell end.

The apparatus according to the invention is further characterised by what is stated in claims 2-21.

The press roll according to the invention is characterised by what is stated in claim 22.

The solution according to the invention has numerous significant advantages. The apparatus enables the moving of belt-shell ends using an extremely compact structure. The moving mechanism is integrated to the belt-shell ends, most advantageously to the bearing unit. The arrangement enables a more reliable arrangement compared to known arrangements, in which the support surfaces/sliding surfaces of the whole moving end structure i.e. belt-shell end are under pressurised lubrication in the operating situation of the machine, whereby the moving end structure in itself constitutes a moving mechanism for the tightening and the lateral displacement of the surface fabric of the shoe roll. The actuators of the moving mechanism, such as supply channels of pressure medium, can be placed into connection with the support beam of the roll and, when necessary, to be built in by borings to the support beam.

### Brief description of the figures

Next, the invention will be described in detail by means of an example with reference to the accompanying drawing, in which
Fig. 1 is a side view of a press roll, seen from the direction of the machine i.e. MD direction,
Fig. 2 shows a section of an apparatus according to the invention,
Fig. 3 shows a schematic and simplified section of a press roll according to the apparatus according to the invention,
Fig. 4 is a simplified view of a press roll according to the invention seen from the direction of the tending side TS, and
Fig. 5 schematically shows a pressure system for using an apparatus according to the invention.

### Detailed description of the invention

In an arrangement according to the application, the rotating bearing of the whole surface fabric i.e. belt shell 1 of the shoe roll is moved in the cross-direction of the machine using a pressure-medium-operated moving device. The moving device is integrated to the bearing mechanism. The moving device comprises at least one chamber room in which by the effect of pressure medium is provided the motion of the belt end in relation to the support beam. According to an advantageous embodiment, the chamber room is the shape of a whole torus curve. Then, pressure medium affects evenly providing an advantageous force effect to the part being moved. Any medium can be used as the pressure medium of the moving device, most commonly a hydraulic liquid. According to an embodiment of the invention, the support surfaces/sliding surfaces of the moving end structure are under pressurised lubrication in the operating situation of the machine and the moving end structure in itself constitutes a moving mechanism for the tightening and the lateral displacement of the surface fabric of the shoe roll.

The invention thus relates to an apparatus in connection with a press roll which press roll comprises a rotating belt shell 1, a fixed advantageously non-rotatable support beam 2 axially extending through the belt shell and advantageously having a stub shaft at its each end, two belt-shell ends 3, 4 axially displaceable on the support beam advantageously on each stub shaft, and fastening elements for fastening the edges on the side of each belt-shell end of the belt shell to each belt-shell end. The apparatus comprises a first support element 13, which is arranged movably to the support beam 2, most advantageously on its stub shaft, and supported by which support element 13 the belt-shell end 3, 4 is arranged bearing-mountedly, whereby the support element 13 and the support beam 2, most advantageously a stub shaft, are arranged to operate together as the moving devices of the axial displacement of at least one belt-shell end. The moving device means mainly a moving mechanism. The actuating medium of the moving mechanism and means related to its displacement, such as pipelines, hoses and channels, are shown schematically in the figures and they are presumed to be known as such by a person skilled in the art. Further are required means for changing the pressure of the actuating medium and for shifting flows, such as valve elements.

Between the support element 13 and the support beam 2, or a portion arranged on it, has been formed at least one chamber room 24, 24'; 25, 25' which is affected using pressure medium so that the support element 13 is displaced in relation to the support beam 2.

Said moving devices i.e. tightening and lateral-displacement devices of the belt shell are formed as a part of the entity of the belt-shell end. Then has been provided, inter alia, a space-saving entity.

In the embodiment of the figure, the support element 13 is arranged floatingly in relation to the support beam 2. The chamber room 24, 24'; 25, 25' has been formed annular seen from the axial direction. The chamber room can be considered to be constituted by several existing chamber rooms. These can be formed to be connected with each other or alternatively so that pressure medium is brought to each separately with their own leading means of the pressure medium.

According to an advantageous embodiment, there is a moving device in question at both belt-shell ends 3, 4.

According to an advantageous embodiment, one of the belt-shell ends 3, 4 can be arranged lockable in position and the devices of the other belt-shell end are arranged to adjust the tightness of the belt shell.

Advantageously, at least a portion of the wall of the chamber room 24, 24'; 25, 25' is formed by the support element 13 or its portion which is affected using the pressure medium so that the support element moves in relation to the support beam 2.

According to an advantageous embodiment, the apparatus comprises means for exerting an annular axial force effect to the support element. Then, by forming the chamber room annular seen from the axial direction, a desired effect is provided in an extremely advantageous way.

According to an advantageous embodiment, two chamber rooms 24, 24'; 25, 25' are formed which are affected by the pressure medium.

The support beam 2 connects the moving mechanisms of the belt-shell ends 3, 4 to each other.

The support beam 2 and the support element 13 constitute together a cylinder-piston combination.

The support beam 2 functions as a piston for the moving mechanism. The piston is one- or multi-part. The piston or its portion has a protruding annular shoulder 19. The piston is in position and the support ring 13 i.e. cylinder moves in relation to the piston.

The pressure-medium-operated moving mechanism of the belt shell i.e. surface fabric of the press roll, especially a shoe roll, is arranged central or non-central in relation to the belt shell i.e. surface fabric and its bearing.

The motion of the moving mechanism at least at one end, advantageously both ends, is around ±0-200 mm. The numerical value in question is typical in many embodiments. According to requirement, the range can be formed even greater. Correspondingly, it can be smaller.

In the operating situation, the mechanism is used for tightening the belt shell.

The apparatus comprises at least one element 15, 16 for preventing the rotation of the support element 13. The element 15, 16 comprises a channel for supplying lubricant.

The invention also relates to a press roll which comprises an apparatus according to any one of the claims.

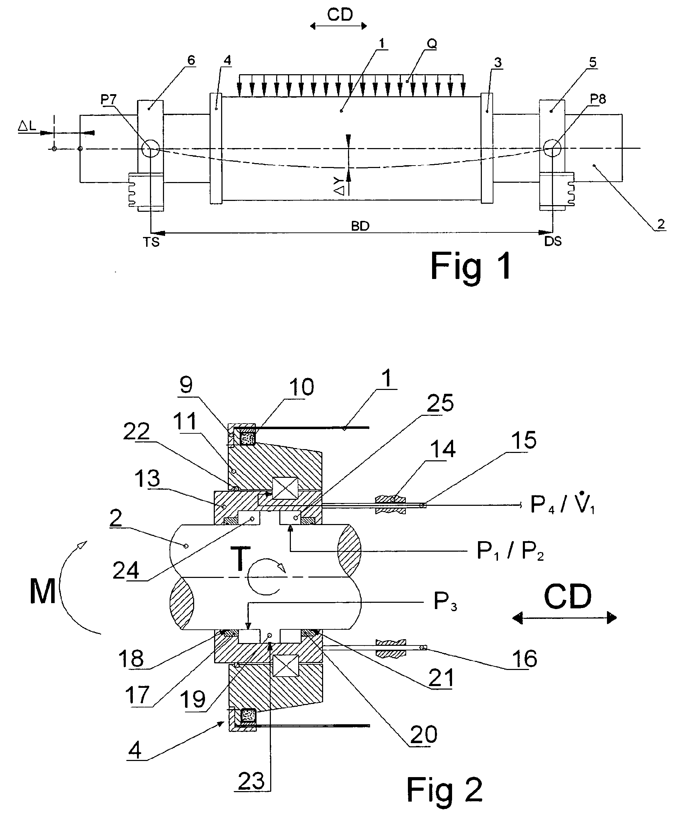

Next, the invention according to the embodiments of the figures will be described in more detail. Fig. 1 is a side view of a press roll, typically a so-called shoe roll of the shoe press, seen from the machine direction i.e. MD direction.

In the structure of the press roll, there usually is a continuous elastic surface fabric i.e. belt shell 1 rotating on the fixed support beam 2, which is in an embodiment commonly manufactured of polyurethane. The belt shell is fastened to belt-shell ends i.e. fastening and bearing units 3, 4 of the surface fabric at the tending and driving side of the machine. The press roll typically comprises also bearings 5, 6 at the bearing distance BD of the roll.

The bearing 5 on the driving side DS of the machine is usually stationary, the same as the bearing 6 of the tending side TS. Inside the bearing 6, the support beam, in this case the piston, can move a travel ΔI caused by thermal expansion towards the tending side TS of the machine. Points 6 and 7 are stationary rotation points for the support beam 2 of the roll. The support beam deflects from the effect of force Q prevailing in the roll nip for Δy in the middle of the machine. The deflection line x travels through the points 6 and 7. The location of the points 6 and 7 remains in position the whole time despite of thermal movements and other environmental effects.

Fig. 2 shows a cross-section of the bearing 4 of the belt-shell end of Fig. 1 on the tending side of the machine. The dimensions have been changed for simplifying the figure. The bearing 3 of the driving side in Fig. 1 is similar of its structure, but a mirror image of the structure in Fig. 2. Part 1 is a rotating fabric which is tightened and displaced in the cross-direction CD of the machine using a pressure-medium-operated moving mechanism inside the bearing 4. Then, the belt-shell end is displaced in relation to the support beam displacing and/or tightening the belt shell.

Part 9 is a fastening ring built of e.g. sectors and part 10 is a pressure-medium-operated fastening element. The end fastening mechanism of the fabric 1 can be e.g. similar to the one described in the applicant's patent specification EP1273701.

Part 11 is an end ring rotating along with the fabric in which ring a sealing 22 is fastened, similarly as the rotating parts of a bearing 12. Part 13 is a support ring stationary in relation to the piston 2 which ring includes sliding rings 17 and 20. The sliding rings 17 and 20 have sealings 18 and 21 against the piston 2. In the piston 2 or its portion, there is an outwards-directing projection ring 19 and inside it a sealing 23 against the support ring 13. In chambers 24 and 25 typically prevails pressure medium. The chambers 24 and 25 are formed in pressure spaces limited by the sealings 18, 21 and 23. The areas of the chambers 24 and 25 are equal in the embodiment of the figure. The rotation of the support ring 13 along the fabric has been prevented with torque supports 15 and 16 which rest on an internal structure 14 of the piston. The torque supports 15 and 16 move in the pace of the part 13 in the CD direction of the machine. Lubricating oil V1 of the bearing 12 is led via the torque support 15 or 16 from the lubrication pipes inside the roll by means of pressure P4. To the chamber 24, 24' can be led on both sides of the machine the same pressure P3. A different pressure prevails in the chambers 25, 25' on both sides of the machine depending on the run situation at hand. The non-rotatable portions of the end bearing 12 are fastened to the support ring 13. The sealing 22 can also be fastened to the part 13 and thus it can also be tightened to the part 11 or to a separate sealing ring inside it. In this description, the sealing ring tightens against the support ring 13. Moment of rotation affecting the bearing 4 is designated with letter M. The support ring 13 is central in relation to the piston 2. The bearing 12 and the end ring 11 can be either central or non-central in relation to the piston 2. Thus, a rotation bearing having an internal displacement mechanism can be constructed in a best possible way in relation to the force balance of the support beam of the roll, here the piston 2. No detrimental moments of rotation T parallel to the piston axis then affect the piston 2 from the effect of nip force Q, see Fig. 1.

Furthermore, the structure includes a wiper known as such against the piston, not shown in the figure.

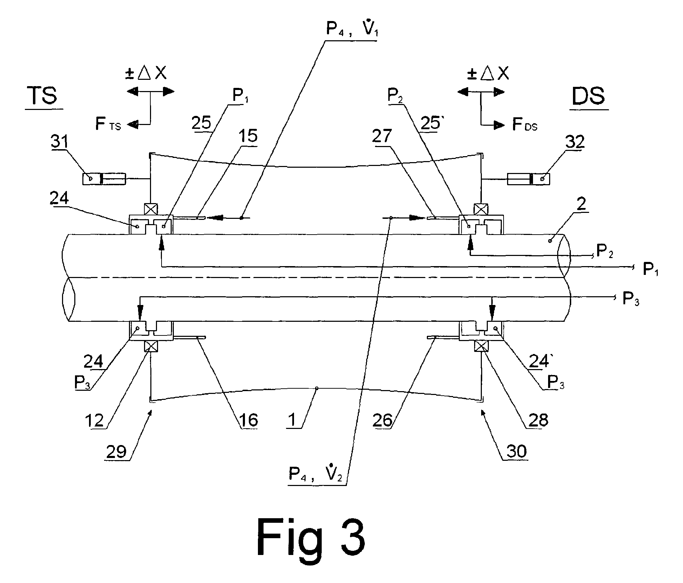

Fig. 3 schematically shows the supply of pressure medium from the end on the driving side DS of the shoe roll and the supply of lubricating oil via torque supports 15, 16, 26 and 27 to bearings 12 and 28. The figure shows that there is a totally identical bearing 29, 30 of the surface fabric 1 on both sides of the machine. It is characteristic to the structure that the support beam 2 of the shoe roll is the piston unit of both bearings 29, 30 and connects the bearings functionally to each other so that both bearings 29 and 30 tighten the surface fabric 1 the whole time in the run situation of the machine away from the machine with an equal force Fts, Fds. It is also characteristic to the structure according to an advantageous embodiment that in the actuator itself the pressure-medium chambers 24, 24' and 25, 25' are of equal size and similar on both sides of the machine. In arrangements according to the figures, the structures are mirror images of each other on the tending side and the driving side. An essential part of the structure are linear sensors 31 and 32 detecting motion on both sides of the machine. The sensors are detecting the position of the end in relation to fixed bearings P7, P8 of the roll, see Fig. 1. It is characteristic of the structure according to the embodiment that all force quantities and volume flow quantities are equal and easily controllable in all chambers. The effective areas of the pressure-medium chambers are equal in the embodiment of the figures. Using the structure, the surface fabric 1 can be displaced to a desired position and kept nominally in position even though the ends are stretching outwards for the whole time after both the displacing event and the displacement. Oscillation is easy by means of this structure because the liquid volumes and the force balance at the ends of the roll are the same. Using this structure, it is possible to perform similar wear-preventing operation and period sequence as in the applicant's patent FI 110529, and the new structure functionally corresponds the old but is an improved version.

Pressure P3 is led to the outermost chambers 24, 24' of the roll ends in which thus prevails now pressure P3. Pressure P1 is led to the inner chamber 25 of the tending-side end in which prevails pressure P1. Pressure P2 is led to the inner chamber 25' of the driving side end in which prevails pressure P2. The pressure P3 is constant and the pressures P1, P2 are control pressures. The surface fabric 1 connects the ends 29, 30 to each other and the ends move laterally (i.e. typically in the axial direction of the roll) at the same pace for a travel Δx. Liquid flows V1 and V2 of lubricating oil are led in the embodiment from the end of the driving-side support beam of the roll to the space inside the roll, not shown in the figure.

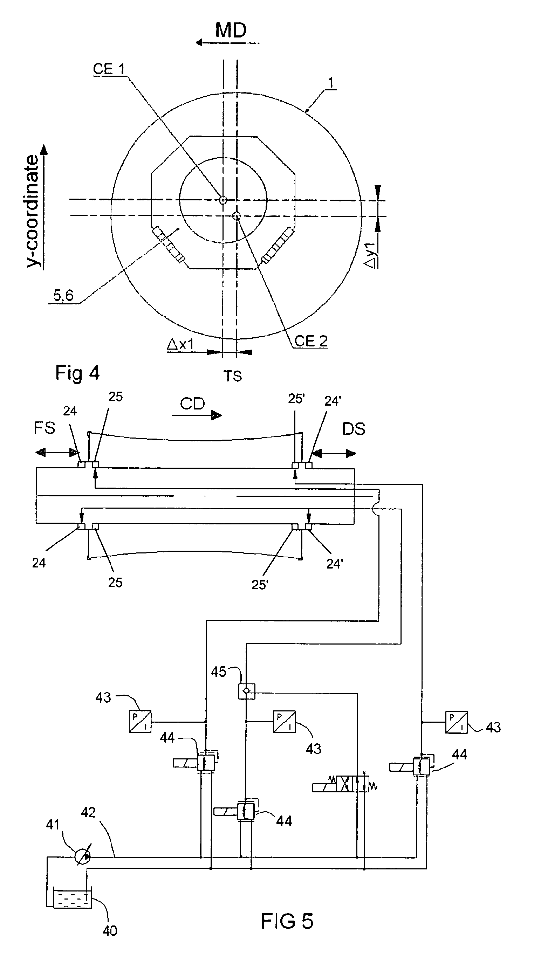

Fig. 4 shows a situation seen from the tending side of the shoe roll. The main bearing 6 on the tending side and the corresponding bearing 5 on the driving side of the machine are non-central or central in relation to a centre CE2 of the surface fabric, whereby a centre CE1 of the main bearings 5, 6 can be off for a travel Δx1 in the MD direction of the machine and displaced for a travel Δy1 in the y direction of the machine. This is a consequence of the structure of the bearing 3, 4 (see Fig. 1) provided with an internal displacement mechanism which is constructed in the best possible way from the viewpoint of force balance.

Fig. 5 schematically shows one pressure medium system by way of an example to be applied in an apparatus according to the invention. The system comprises a container 40 from which pressure medium, such as e.g. hydraulic oil, pressurised with a regulating pump 41 is led to a supply line 42 and led via branches to internal chambers 25, 25'. The regulating pump 41 maintains constant pressure in the supply line. Connected to the branches of the supply line are pressure-measuring means 43 for measuring pressure prevailing in the chambers which means are connected to a control system (not shown in the figure) controlling the pressure system. Also possible position transducers of belt-shell ends are connected to the control system for bringing the position data of the belt-shell ends to the system. Here is referred to e.g. the applicant's patent FI110529. To the branches of the supply line are arranged proportional pressure reduction valves 44 controlled by the control system using which valves the pressure prevailing in the chamber can be set. To the branches leading to chambers 24, 24' is further arranged a counter valve 45 controlled by control pressure by controlling which using the control system the pressure of chambers 24, 24' can be reduced.

Next, the operation of the method and apparatus according to the invention during application of the press roll will be described. After the belt shell 1 of the press roll 1 has been changed and fastened to the belt-shell ends 3 and 4, constant-level air pressure is supplied into the space inside the belt shell 1 and the belt shell is tightened. The tightening of the belt shell 1 is performed by pressurising the chamber 24, 24' and, when necessary, by providing suitable counter pressure to the chambers 25 and 25'. Then, the support ring 13 and the corresponding support element at the other end of the roll are displaced from each other and displace the belt-shell ends 3 and 4 simultaneously to the opposite directions, whereby the belt shell 1 fastened to the belt-shell ends tightens. The belt shell is tightened to a desired tightness and centred to the centre line of the machine. The tightness of the belt shell can be measured when necessary e.g. by measuring the pressures of the chambers and comparing them to each other. After the belt shell has been tightened, the pressure of the chamber 24, 24' is controlled to remain substantially constant.

When the belt shell is of a type stretchable during the operation of the press roll, the support elements are further displaced away from each other, whereby the pressure of the chamber 24, 24' changes, whereby for maintaining a constant tightness of the belt shell the pressure of the pressure medium being directed to the chamber 24, 24' has to be adjusted to maintain a correct tightness.

When the belt shell is desired to be displaced e.g. for decreasing its wear, the pressure prevailing in the chamber 24, 24' is further maintained constant and the pressures prevailing in the chambers 25 and 25' are altered. Then, the pressure in one chamber is increased while the pressure in the other is simultaneously decreased, whereby the ends move simultaneously in the desired direction. After the desired step value has been reached, the motion stops and the pressures are standardised to the normal level. The belt is then kept in position until the next period. The lateral displacement of the belt is implemented as periodic and stepwise displacement. The length of the period as well as the magnitude of the step value are selected as desired.

The belt shell can be displaced in the manner described above e.g. using incremental adjustment with adjustment settings towards one of the ends until the belt reaches a predetermined limit value. Incremental adjustment means that the belt shell is displaced relatively quickly by an amount corresponding to the adjustment setting, e.g. two millimetres. The period between adjustments can be e.g. 1...7 days. When the belt is in one of its extreme positions, the direction of displacement is reversed.

Alternatively, both belt-shell ends 3, 4 can be adjusted separately, e.g. so that the first belt-shell end (e.g. 3) is located i.e. locked to a certain position. Then, the tightness of the belt is adjusted only using the moving means of one belt-shell end (e.g. 4). This can be implemented e.g. so that for each chamber 24, 24', 25, 25' are arranged their own supply channels for pressure medium, whereby by means of them the pressures of different chambers can be adjusted separately when necessary.

Next will be presented some features of embodiments of an apparatus according to the invention:
- the sliding rings of the bearing are in contact with pressure medium, the piston and the support ring
- the sliding rings have sealings which are in contact with the piston
- inside the bearing, there is a wiper which is in contact with the piston
- inside the end bearing of the shoe roll, there are at both ends of the roll one- or multi-operated pressure chambers filled by pressure medium
- the areas of the pressure-medium chambers are all equal
- the pressure medium simultaneously affects the outer pressure chambers at the ends of the roll
- the inner pressure-medium chambers operate independently
- the fabric stretches the whole time in the operating situation of the machine so that the ends draw away from each other
- using the structure, it is possible to oscillate evenly in the use situation of the machine with equal force couples in the cross-direction of the machine
- the structure enables sequence displacement in the use situation of the machine
- the surface fabric 1 of the roll can be displaced without losing tightness to a desired position in the cross-direction CD of the machine and be kept in position the ends still being displaced from each other
- the support ring 13 functions as a cylinder the rotation of which is prevented with torque supports
- the torque supports i.e. support elements 15, 16 function as the supply channels of lubricating oil

It is obvious to those skilled in the art that the invention is not limited to the embodiments described above, but it can be varied within the scope of the enclosed claims. When necessary, the characteristic features possibly described in this specification together with other characteristic features can also be used separate from each other.

## Claims

1. An apparatus in connection with a press roll which press roll comprises a rotating belt shell (1), a fixed advantageously non-rotatable support beam (2) axially extending through the belt shell and advantageously having a stub shaft at its each end, two belt-shell ends (3, 4) axially displaceable on the support beam, advantageously on each stub shaft, and fastening elements for fastening the edges on the side of each belt-shell end of the belt shell to each belt-shell end, **characterised in that** the apparatus comprises a first support element (13) which is arranged movably on the support beam (2), most advantageously on its stub shaft, and resting on which support element (13) the belt shell (3, 4) is arranged bearing-mountedly, whereby the support element (13) and the support beam (2), most advantageously a stub shaft, are arranged to function together as the moving device of the axial displacement of at least one belt-shell end.

2. An apparatus according to claim 1, **characterised in that** between the support element (13) and the support beam (2), or a part arranged on it, has been formed at least one chamber room (24, 24'; 25, 25') which is affected using pressure medium so that the support element (13) is displaced in relation to the support beam (2).

3. An apparatus according to claim 1 or 2, **characterised in that** said moving devices i.e. tightening and lateral-displacement devices of the belt shell are a part of the entity of the belt-shell end.

4. An apparatus according to any one of claims 1-3, **characterised in** the support element (13) having been arranged floatingly in relation to the support beam (2).

5. An apparatus according to any one of claims 1-4, **characterised in** the chamber room (24, 24'; 25, 25') having been formed annular seen from the axial direction.

6. An apparatus according to any one of claims 1-5, **characterised in that** there is a moving device in question at each belt-shell end (3, 4).

7. An apparatus according to any one of claims 1-6, **characterised in that** at least a portion of the wall of the chamber room (24, 24'; 25, 25') has been formed by the support element (13) or its portion which is affected using the pressure medium so that the support element moves in relation to the support beam (2).

8. An apparatus according to any one of claims 1-7, **characterised in that** the apparatus comprises means for applying an annular axial force effect to the support element (13).

9. An apparatus according to any one of claims 1-8, **characterised in that** two chamber rooms (24, 24'; 25, 25') are formed which are affected by pressure medium.

10. An apparatus according to any one of claims 1-9, **characterised in that** the support beam (2) connects the moving mechanisms of the belt-shell ends (3, 4) to each other.

11. An apparatus according to any one of claims 1-10, **characterised in that** the support beam (2) and the support element (13) together constitute a cylinder-piston combination.

12. An apparatus according to any one of claims 1-11, **characterised in that** the support beam (2) functions as a piston for the moving mechanism.

13. An apparatus according to any one of claims 1-12, **characterised in that** the piston is one- or multi-part.

14. An apparatus according to any one of claims 1-13, **characterised in that** the piston or its portion has a protruding annular shoulder (19).

15. An apparatus according to any one of claims 1-14, **characterised in that** the piston is in position and the support ring (13) i.e. cylinder moves in relation to the piston.

16. An apparatus according to any one of claims 1-15, **characterised in that** the pressure-medium-operated moving mechanism of the belt shell (1) of the press roll is arranged at least in the axial direction central or non-central in relation to the surface fabric (1) and its bearing.

17. An apparatus according to any one of claims 1-16, **characterised in that** the axial motion of the moving mechanism at least at one end (3, 4), advantageously both ends, is around ±0-200 mm.

18. An apparatus according to any one of claims 1-17, **characterised in that** in the use situation the moving mechanism is used for tightening the belt shell (1).

19. An apparatus according to any one of claims 1-18, **characterised in that** the apparatus comprises at least one element (15, 16) for preventing the rotation of the support element (13).

20. An apparatus according to claim 19, **characterised in that** the element (15, 16) comprises a channel for supplying lubricant.

21. An apparatus according to any one of claims 1-20, **characterised in that** one of the belt-shell ends (3, 4) is arrangeable to be locked in position and the devices of the other belt-shell end are arrangeable to adjust the tightness of the belt shell (1).

22. A press roll, **characterised in that** it comprises an apparatus according to any one of claims 1-21.
